# EUROPEAN PATENT SPECIFICATION

(11) **EP 3 415 882 B1**
(45) Date of publication and mention of the grant of the patent: **02.03.2022**
(21) Application number: 17306289.4
(22) Date of filing: 28.09.2017
(51) Int. Cl.: G01J 3/04, G01J 3/14, G01J 3/16, G01J 3/28, G01J 3/02

(54) **IMAGING SPECTROPHOTOMETER AND SATELLITE COMPRISING THE SAME**
ABBILDUNGSSPEKTROPHOTOMETER UND SATELLIT DAMIT
SPECTROPHOTOMÈTRE D'IMAGERIE ET SATELLITE LE COMPRENANT

(30) Priority: 15.06.2017 FR 1755445; 15.06.2017 FR 1755447
(43) Date of publication of application: 19.12.2018
(73) Proprietor: Airbus Defence and Space SAS, 31402 Toulouse Cedex 4 (FR)
(72) Inventor: PASTERNAK, Frédérick, 31402 TOULOUSE CEDEX 4 (FR)
(74) Representative: Plasseraud IP

(56) References cited:
- EP-A1- 0 642 005
- WO-A1-99/63311
- WO-A2-02/052233
- US-A1- 2010 328 659

## Description

The invention relates to an imaging spectrophotometer and a satellite which comprises such imaging spectrophotometer.

### -- BACKGROUND OF THE INVENTION --

Imaging spectrophotometers are observation apparatuses which output so-called multispectral or hyper-spectral images of a scene. One multispectral or hyper-spectral image is comprised of a plurality of spectral images which all represent one same scene but using respective limited wavelength ranges which are distinct. "Multispectral" or "hyper-spectral" refers to the number of the spectral images, and also to the wavelength pitch between two successive spectral images. In the following, the word "multispectral" will be used to encompass both common uses of "multispectral" and "hyper-spectral" words.

In particular, imaging spectrophotometers are implemented on board satellites which have observation missions, for example Earth observation missions.

Such imaging spectrophotometer as known from prior art comprises:
- a telescope, which is adapted for collecting light originating from a scene and for producing an image of the scene in a focal plane of this telescope;
- a mask which is located in the telescope focal plane, and which is provided with a slit so as to transmit selectively light rays which are sent by the telescope through this slit; and
- a spectrophotometer which is arranged for imaging a content of the telescope focal plane in an output focal plane, and has a dispersion direction that is contained in the output focal plane.

The spectrophotometer comprises at least one array-type image detector which is arranged at the output focal plane, and is oriented so that pixel columns of this image detector are parallel to the dispersion direction.

Furthermore, the spectrophotometer is oriented with respect to the mask so that the dispersion direction is perpendicular to a longitudinal direction of an image of the slit in the output focal plane. In this way, scene elements which are imaged in the slit by the telescope are re-imaged by the spectrophotometer on the image detector within the slit image. Additionally, a spectrum of the light which originates from each of the scene elements is spread perpendicular to the longitudinal direction of the slit image. Thus, an image-spectrum segment which is associated with the slit is formed on the array-type image detector.

But because of spatial and spectral resolution requirements, an important issue of such apparatuses relates to the radiometric performances which are necessary to obtain high enough values for signal-to-noise ratios. Such signal-to-noise ratios relate to the signal values which are read out from the pixels of the image detector. The radiometric performances can be improved by increasing the size of the telescope, so as to increase the amount of light collected. But any increase in the telescope size is especially unfavourable for instruments intended to be on board satellites or spacecraft.

The radiometric performances can also be improved by increasing the accumulation time which is used for capturing one multispectral image, but long accumulation times are compatible with pushbroom operation from a satellite only by implementing a slowdown of the scanning of the scene. Then, two zones of interest in the scene which are image-captured successively require that an intermediate switch in the orientation of the apparatus line-of-sight is performed, from the end of the slowdown movement which has been performed for the first zone of interest to the start of the slowdown movement to be performed for the next zone of interest. And the average time necessary for such switch in the orientation of the apparatus line-of-sight is longer when the slowdown is maintained over an image capture duration which is longer, and this leads to an overall image capture capacity which is lower.

Starting from this situation, one idea consists in providing an imaging spectrophotometer which alleviates the preceding issues of radiometric performances and image capture capacity.

For meeting this object, a first example proposes an imaging spectrophotometer as recited before, but in which the mask comprises several slits which are parallel and spaced perpendicular to these slits. Thus, one respective image-spectrum segment is associated with each slit separately from each other slit. Furthermore, a spectral detection window of the spectrophotometer together with an inter-slit spacing of the mask are such that any two image-spectrum segments which are associated with two neighbouring ones of the slits do not overlap in the output focal plane.

So, the imaging spectrophotometer is modified for multiplying scene strips which are imaged and spectrally spread through the spectrophotometer. In this way, the imaging spectrophotometer is capable to capture simultaneously multispectral images of several scene strips, through all the slits. These scene strips are at one time within the scene at respective locations which optically correspond to the slits through the telescope.

Generally for the invention, the mask may comprise at least three slits, preferably less than nine slits, for example four slits, which are parallel, identical and evenly spaced.

Various examples of such spectrophotometers can be found in patent documents US20100328659, EP0642005 and WO9963311.

Also, the spectrophotometer may comprise a combination of two prims for producing the dispersion, in which both prisms are selected so that an effective non-linear wavelength-dispersion component, as resulting from the two-prism combination, is reduced when compared to a separate non-linear wavelength-dispersion component of each of the two prisms. In this way, the imaging spectrophotometer can have a constant or almost constant wavelength-dispersion rate along the pixel columns of the image detector, for all the image-spectrum segments.

In first examples, the imaging spectrophotometer may further comprise:
- a controller suitable to cause the image detector to perform a series of successive accumulation and read-out operations while the image of the scene which is formed by the telescope moves in the telescope focal plane in such a way that one and same scene strip is imaged in the output focal plane successively through several ones of the slits; and
- optionally a combining unit suitable to combine contents from at least two of the image-spectrum segments, when these contents relate to said one and same scene strip but pertain to accumulation and read-out operations which have been performed separately.

Put another way, such imaging spectrophotometer allows combining contents from several image-spectrum segments which are captured at various times but correspond to the same scene strip. Such operation increases the signal-to-noise ratio for each pixel of the multispectral image, by a factor of N^{1/2}, where N is the number of image-spectrum segment contents which are combined.

When the assembly of the telescope, the mask, the spectrophotometer and the controller is arranged on board a satellite or a spacecraft, the combining unit may be also on board the satellite or spacecraft. But preferably, the combining unit may be arranged in a remote data processing station, and the contents of at least two image-spectrum segments which are to be combined are transmitted from the satellite or spacecraft to the combining unit. The data processing station may be a ground station on the Earth.

In second examples, the imaging spectrophotometer may further comprise:
- another controller suitable to cause the image detector to perform a series of successive accumulation and read-out operations while the image of the scene which is formed by the telescope moves in the telescope focal plane over a distance at least equal to a sum of a slit width and the inter-slit spacing; and
- optionally an image reconstruction unit suitable to form a full-frame multispectral image by gathering line contents which are outputted successively by the image detector from all the image-spectrum segments.

In this way, the imaging spectrophotometer allows capturing a full-frame multispectral image while executing a scan of the zone of interest in the scene which may be limited in spatial length to the full-frame length divided by the slit number. A slowdown rate of the scanning which may be necessary for operation on board a satellite can also be reduced as a consequence, and allows the image capture capacity to be higher.

When the assembly of the telescope, the mask, the spectrophotometer and the controller is arranged on board a satellite or a spacecraft, the image reconstruction unit may be also on board the satellite or spacecraft. But preferably, the image reconstruction unit may be arranged in a remote data processing station, and the line contents which are to be gathered to form a full-frame multispectral image are transmitted from the satellite or spacecraft to the image reconstruction unit. The data processing station may be again a ground station on the Earth.

Both first and second examples just recited may also be combined to form other imaging spectrophotometers.

### SUMMARY OF THE INVENTION

According to a general improvement of an imaging spectrophotometer according to the invention, the atter further comprises:
- a beam divider arranged upstream the telescope focal plane along a light propagation path within the telescope, and designed for allowing each slit of the mask to be entirely exposed to part of the light which is collected by the telescope, and for allowing another part of said light which is collected by the telescope to focus into another telescope focal plane without further travelling through the spectrophotometer; and
- an additional image detector set arranged at said another telescope focal plane so as to capture scene images produced by the telescope from said another part of the light which does not travel through the spectrophotometer.

Thus, such improvement consists in adding a further imaging channel, which is devoid of spectral dispersion. Such additional imaging channel may in particular detect light over the entire wavelength range which is involved by the spectrophotometer.

The beam divider used for such improvement is designed so as to direct respective first sub-beams of the light collected by the telescope to the slits of the mask, and respective second sub-beams of said light collected by the telescope to spaced-apart pixel lines or spaced-apart pixel line groups of the additional image detector set. Here, pixel line group denotes a group of neighbouring pixel lines. Additionally, the pixel lines or pixel line groups of the additional image detector set are optically interleaved with the slits through the beam divider.

The additional image detector set which is used in the added imaging channel may be comprised of at least one another array-type image detector. Then the pixel lines or pixel line groups are spaced apart within the photosensitive surface of this another array-type image detector.

When embodiments of the invention as described above are provided with the improvement of the added imaging channel, the number of the pixel lines or pixel line groups of the additional image detector set may advantageously equal the number of the slits provided in the mask plus one. Thus, the spectrophotometer channel and the added imaging channel can produce respective images of one common zone of interest in the scene which is optimized in size with respect to the image detectors of both channels.

A second aspect of the invention proposes a satellite which comprises a platform, an attitude control system for varying an orientation of the platform, and an imaging spectrophotometer according to the first invention aspect, this imaging spectrophotometer being supported rigidly by the platform. The satellite further comprises steering means suitable for directing the line-of-sight of the imaging spectrophotometer towards successive scene strips in a pushbroom manner, while the image detector performs a series of successive accumulation and read-out operations. The steering means may be part of the satellite attitude control system, or may comprise a steering mirror system which is arranged in front of a primary mirror of the telescope, or a combination of an operation of the satellite attitude control system with a steering mirror system.

Preferably, the steering means may be suitable to produce a slowdown of a scanning of a zone of interest in the scene by the line-of-sight of the imaging spectrophotometer while the image detector performs the series of successive accumulation and read-out operations for capturing a full-frame multispectral image.

For the second aspect of the invention, the steering means may be suitable to produce the slowdown of the scanning of the zone of interest in the scene by the line-of-sight of the imaging spectrophotometer limitedly within a scan duration in which the image of the scene which is formed by the telescope moves in the telescope focal plane over a distance that is comprised between the sum of the slit width and the inter-slit spacing, and another sum of the slit width and twice the inter-slit spacing. The attitude control system or steering mirror system is also suitable to switch the line-of-sight of the imaging spectrophotometer to another zone of interest in the scene after the scan duration has ended.

A third aspect of the invention proposes a process for capturing a multispectral image, which comprises the following steps:
- providing a satellite according to the second invention aspect, which satellite is in orbit around the Earth;
- directing the line-of-sight of the imaging spectrophotometer towards a zone of interest on the Earth;
- moving the line-of sight so that an image of a scene which is contained in the zone of interest moves in the telescope focal plane, and simultaneously controlling the array-type image detector so as to perform a series of successive accumulation and read-out operations; and
- transmitting read-out data which have been produced by the successive accumulation and read-out operations to a data processing unit, this data processing unit being suitable for producing the multispectral image from the read-out data.

The data processing unit may be on board the satellite, but it may be preferably located on the Earth. In this latter case, the read-out data are to be transmitted from the satellite to a ground receiving station and then forwarded to the data processing unit.

A fourth aspect of the invention proposes a process for obtaining a multispectral image, which process comprises:
- providing a data processing unit located on the Earth, this data processing unit being suitable for producing the multispectral image from the read-out data which have been produced by a process according to the third invention aspect;
- collecting the read-out data and transmitting them to the data processing unit; and
- operating the data processing unit for producing the multispectral image from the read-out data.

For the third and fourth invention aspects, the data processing unit may be a combining unit or an image reconstruction unit as recited above in connection with the first and second embodiments of the first invention aspect.

These and other features of the invention will be now described with reference to the appended figures, which relate to preferred but not-limiting embodiments of the invention.

### -- BRIEF DESCRIPTION OF THE DRAWINGS --

Figure 1 illustrates an implementation of an imaging spectrophotometer on board a satellite.
Figure 2 is general perspective view of an imaging spectrophotometer according to the invention, suitable for the implementation of Figure 1.
Figure 2a is an enlarged view of a part of Figure 2, from another observation side.
Figure 3a and 3b are plan views of a mask used in the imaging spectrophotometer of Figure 1.
Figure 3c is an optical diagram of a beam splitter which according to the invention is used in the imaging spectrophotometer of Figure 1.
Figure 4 illustrates an allocation of portions of a photosensitive surface of an image detector which is used in the imaging spectrophotometer of Figure 1.
Figure 5 illustrates first embodiments of the invention.
Figure 6 illustrates second embodiments of the invention.

For clarity sake, element sizes which appear in these figures do not correspond to actual dimensions or dimension ratios. Also, same reference numbers which are indicated in different ones of these figures denote identical elements of elements with identical function.

### -- DETAILED DESCRIPTION OF THE INVENTION --

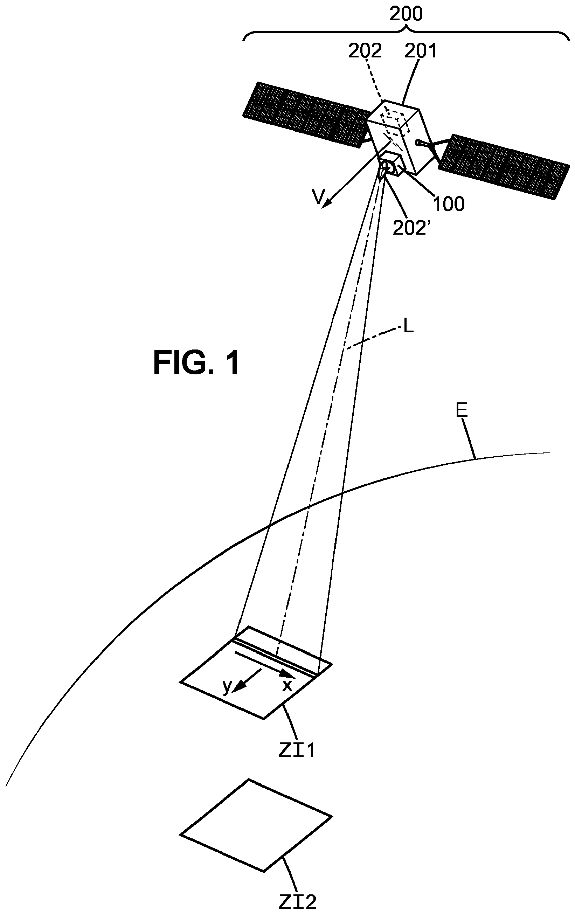

Figure 1 shows a satellite 200 in orbit over the Earth E, with the arrow V denoting the speed vector of the satellite. The satellite 200 is provided on board with an imaging spectrophotometer 100 , a satellite platform 201, and a satellite attitude control system 202. The imaging spectrophotometer 100 is fixed rigidly to the platform 201, and the attitude control system 202 allows controlling an orientation of the platform 201.

The imaging spectrophotometer 100 is designed for capturing images of strips of the Earth surface which are perpendicular to the satellite speed vector V. Then, repeating several image capturing operations while the satellite 200 moves allows imaging a two-dimensional area in the Earth surface, called zone of interest. ZI1 denotes a first zone of interest, and ZI2 another one. Each zone of interest can be image-captured in this manner, known as pushbroom process by the Man skilled in the art. The longitudinal direction of the strips of the Earth surface which are successively image-captured is denoted x. For such operation, the scanning direction of each zone of interest, denoted y, is parallel to the speed vector V of the satellite 200, but other operations are also possible where the scanning direction is no longer parallel to the speed vector V.

As commonly known, the orientation of the line-of-sight L of the imaging spectrophotometer 100 towards any point of a median line of a zone of interest to be pushbroom-scanned can be performed by rotating the satellite 200 appropriately, using the attitude control system 202. Alternatively, this can also be performed by controlling a steering mirror which is arranged on board the satellite 200 in front of the optical entrance of the imaging spectrophotometer 100. Such steering mirror is labelled 202' in Figure 1, but it may not be implemented if the satellite attitude control system 202 is agile enough. Also possibly, satellite rotation and steering mirror may be combined for varying the orientation of the line-of-sight L.

Again as commonly known, the pushbroom-scan of each zone of interest in the Earth surface may be performed by implementing a slowdown of the shift of the line-of-sight L with respect to the moving of the satellite 200 along its orbit. Such slowdown can be made necessary by the maximum frame readout frequency of the image detector which is used in the imaging spectrophotometer 100, or by insufficient light intensity which makes necessary to increase the accumulation duration for each strip within the zone of interest being currently scanned.

Also, moving the line-of-sight L from one zone of interest to a next one to be scanned, for example from ZI1 to ZI2, is time consuming. Such durations between successive pushbroom scans reduce the overall number of zones of interest which can be processed during one travel of the satellite 200 over the Earth surface portion which contains these zones of interest.

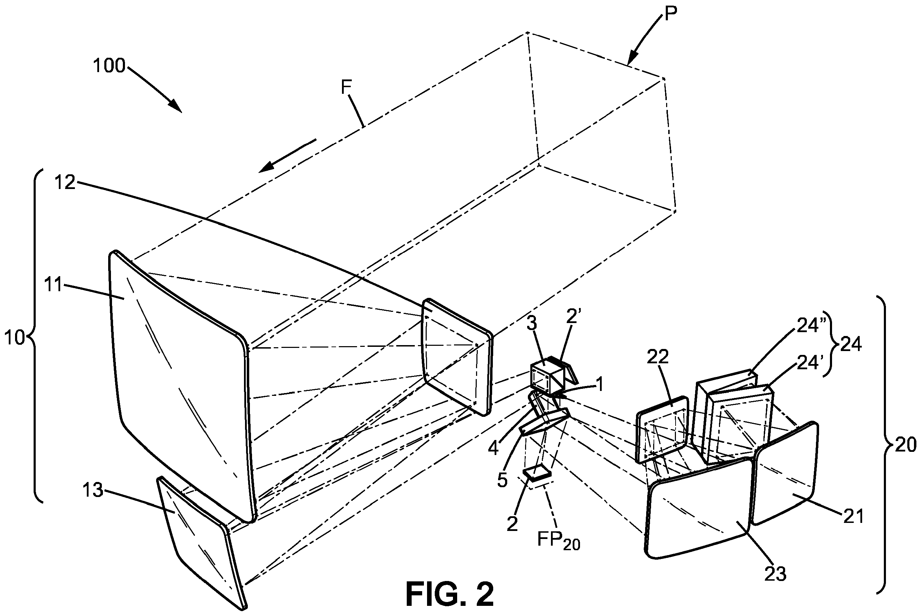

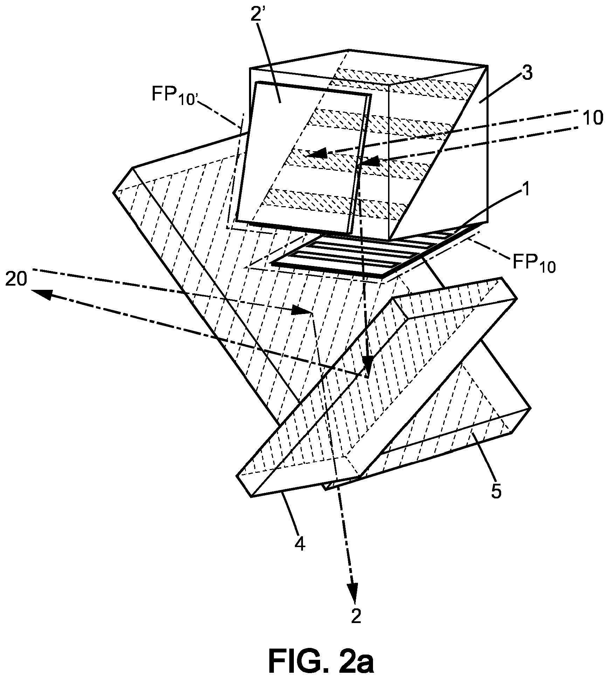

In Figures 2 and 2a, reference numbers 10 and 20 denote a telescope and a spectrophotometer, respectively.

The telescope 10 may be of any type known in the art. For example, it may be of three-mirror anastigmat type, with primary mirror 11, secondary mirror 12 and tertiary mirror 13. The light beam F originates from a scene such as the zone of interest ZI1 in the Earth surface when the imaging spectrophotometer 100 is implemented on board the satellite 200. Reference letter P indicates the entrance pupil of the telescope 10. The light beam F is reflected successively by the primary mirror 11, then the secondary mirror 12, and then the tertiary mirror 13, so as to be focussed in a focal plane FP₁₀ of the telescope 10.

The spectrophotometer 20 may also be of any type known in the art. For example, it may have a Littrow configuration, with first mirror 21, second mirror 22, third mirror 23, and a dispersing element 24. The spectrophotometer 20 is designed to image a content of the focal plane FP₁₀ of the telescope 10 within an output focal plane FP₂₀. The light which is transmitted through the telescope focal plane FP₁₀ is reflected first by the third mirror 23, then the second mirror 22, then the first mirror 21, then is reflection-dispersed by the dispersing element 24, then reflected again by the first mirror 21, then the second mirror 22, then the third mirror 23, so as to be focussed in the output focal plane FP₂₀. Thus, the imaging spectrophotometer 100 produces in the output focal plane FP₂₀ an image of the scene which is combined with the pattern of a mask that may be located within the telescope focal plane FP₁₀. In addition, the scene image in the output focal plane FP₂₀ is combined with dispersion produced by the dispersing element 24.

Advantageously, the dispersing element 24 may be based on at least one prism of a refracting transparent material, which is selected with respect to the operation wavelength range desired for the imaging spectrophotometer 100. For example, this wavelength range may extend from 400 nm (nanometer) to 2500 nm, and the dispersing element 24 may be a combination of two prisms which are arranged serially in the Littrow configuration of the spectrophotometer 20. One of these prisms, labelled 24', may be out of a highly dispersing glass, and the other one, labelled 24", may be out of another transparent material which is selected for compensating a non-linear component of the wavelength dispersion which is produced by the prism 24'. The total dispersion rate which is obtained in this way, when expressed as a derivation of an angular deviation with respect to the wavelength, may be both important and almost constant over the whole wavelength range or a large part thereof.

Reference number 2 denotes an image detector which is located at the output focal plane FP₂₀. For implementing the invention, the image detector 2 is of array-type, with pixels which are distributed in columns and rows in a well-known manner. The image detector 2 is oriented so that the pixel columns are parallel to a dispersion direction which is produced by the spectrophotometer 20 in the output focal plane FP₂₀.

Reference number 3 denotes a beam divider which is located between the tertiary mirror 13 of the telescope 10 and the telescope focal plane FP₁₀ along the light path. For example, the beam divider 3 may be a bi-prism designed for transmitting a first part of the light which propagates from the telescope 10, and reflecting another part of this light. Hence, the beam divider 3 duplicates the telescope focal plane FP₁₀ into an additional telescope focal plane FP₁₀'. Then, arranging an additional image detector 2' at this additional telescope focal plane FP₁₀' allows recovering an image of the scene from light which has not been dispersed by the spectrophotometer 20.

Reference numbers 4 and 5 denote two optional folding mirrors. The folding mirror 4 is located between the telescope focal plane FP₁₀ and the third mirror 23 along the light path at the entrance end of the spectrophotometer 20, and the folding mirror 5 is located between the third mirror 23 and the output focal plane FP₂₀ at the output end of the spectrophotometer 20. The folding mirrors 4 and 5 may be useful for obtaining a compact design for the whole imaging spectrophotometer 100.

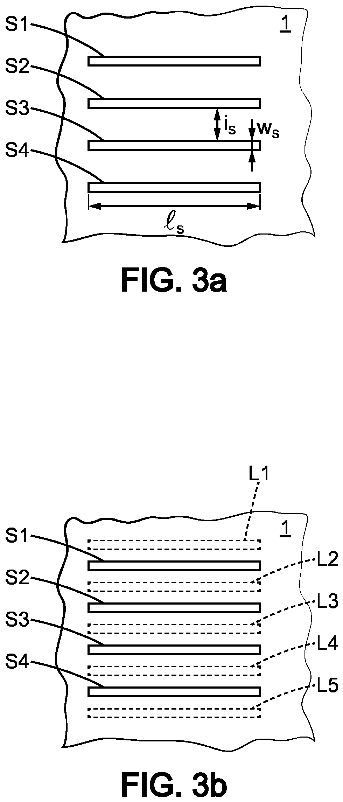

According to Figure 3a, a mask 1 is light-blocking except within slits which transmit light. For example, the mask 1 may be provided with four slits labelled S1 to S4. The slits S1-S4 are parallel and spaced apart from each other along a direction which is perpendicular to these slits. Iₛ, wₛ and iₛ denote respectively the slit length, the slit width and the inter-slit spacing, which are common to all slits. The mask 1 is to be located in the telescope focal plane FP₁₀ (Figure 2a), with the slits oriented so as to appear perpendicular to the dispersion direction which is produced by the spectrophotometer 20 in the output focal plane FP₂₀. Put another way, the slits are oriented in the telescope focal plane FP₁₀ so that their respective monochromatic images through the spectrophotometer 20 each extend longitudinally parallel to the pixel rows of the image detector 2 within the output focal plane FP₂₀.

Therefore, each one of the slits S1-S4 of the mask 1 allows a scene strip which is imaged within this slit in the telescope focal plane FP₁₀ to be re-imaged in the output focal plane FP₂₀ parallel to the pixel row direction of the image detector 2, and the light which corresponds to each location in this latter image is spread spectrally parallel to the pixel column direction. This results in a portion of the image detector 2 being dedicated to each slit. Such detector portion has been called image-spectrum segment in the general part of this description, and it is an issue that two image-spectrum segments which correspond two neighboring ones of the slits S1-S4 do not overlap along the pixel column direction. Such overlapping suppression can be obtained by selecting appropriately the inter-slit spacing iₛ with respect to the extension of the image-spectrum segments along the pixel column direction, or by limiting the length of the spectral range of the light which reaches the image detector 2. The Man skilled in optics will be able to select appropriately these parameters of the imaging spectrophotometer 100, and the following values are only provided as a non-limiting example:
wavelength detection range of the image detector 2: 400 nm - 2500 nm focal length of the telescope 10: 937.5 mm (millimeter)
slit width wₛ: about 15 µm (micrometer)
slit length Iₛ: about 15 mm
inter-slit spacing iₛ: 3.84 mm
focal length of the spectrophotometer 20: 334.8 mm
size of the image detector 2: 1024 pixels x 1024 pixels
pixel pitch of the image detector 2 along the column direction and the row direction: 15 µm
wavelength sampling pitch along the column direction of the image detector 2: 10 nm
height of each image-spectrum segment along the column direction of the image detector 2: 210 pixels
spacing between two neighboring image-spectrum segments along the column direction of the image detector 2: about 46 pixels

In particular, the invention may be implemented using the NGP detector produced by Sofradir^{®}, NGP standing for «Next Generation Panchromatic^{®}», for the array-type image detector 2.

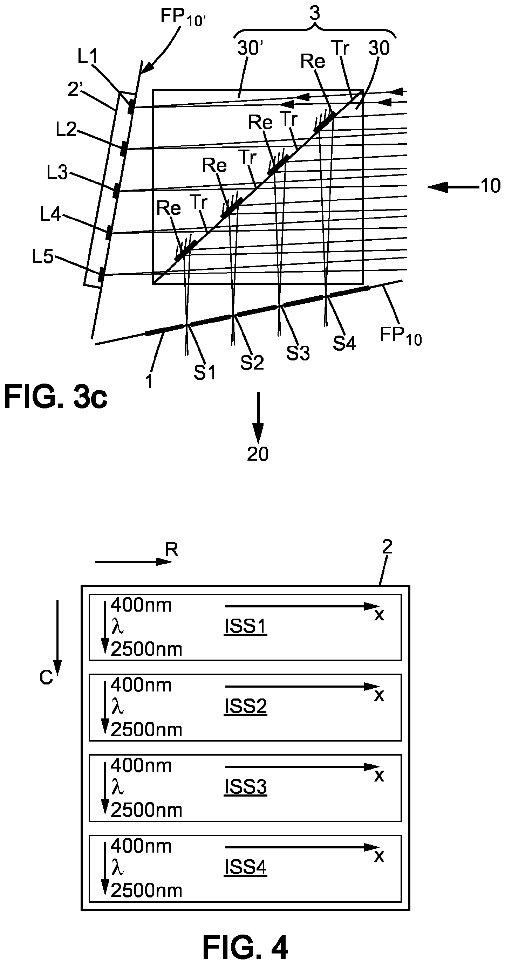

Figure 4 shows the allocation of the photosensitive area of the image detector 2 which results from such implementation. C and R denote the column direction and the row direction of the image detector 2, respectively. ISSn denotes the image-spectrum segment which corresponds to the slit n, n being an integer index from 1 to 4 in the implementation example considered. Within each image-spectrum segment ISSn, the longitudinal direction of the scene strip which is imaged, denoted x, is parallel to the row direction R, and the dispersion direction, denoted λ, is parallel to the column direction C. The four image-spectrum segments ISS1-ISS4 relate to four scene strips which are spaced apart in the zone of interest ZI1 perpendicular to the longitudinal direction of the strips. Furthermore, the first pixel row within each image-spectrum segment ISSn corresponds to the wavelength sampling interval 400 nm - 410 nm, and the last pixel row within each image-spectrum segment ISSn corresponds to wavelength sampling interval 2490 nm - 2500 nm.

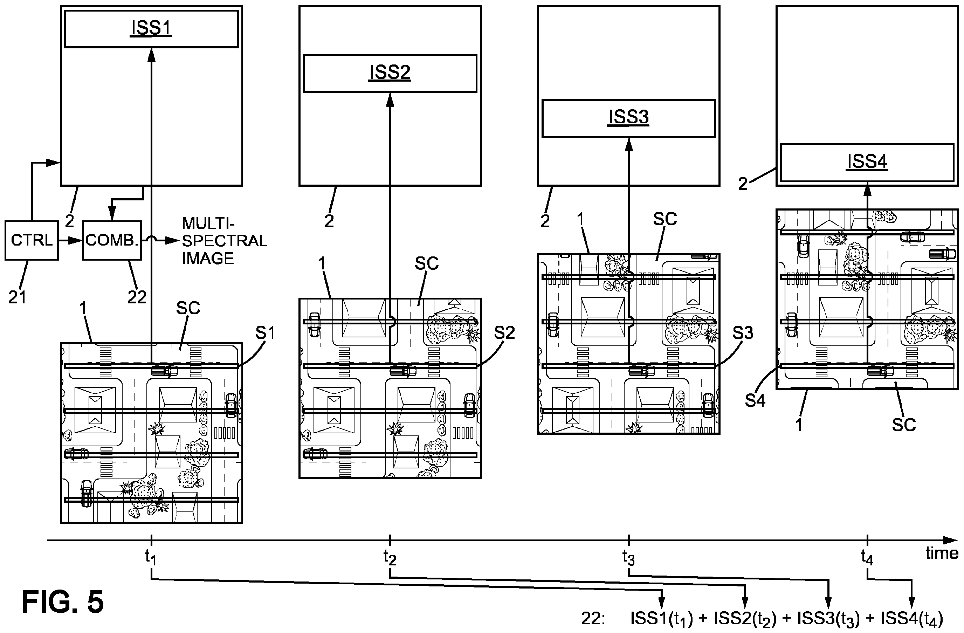

First embodiments of the invention now described may be appropriate for increasing a value of a signal-to-noise ratio which exists upon multispectrally image-capturing one zone of interest, such as ZI1 for example. Photonic noise involved upon signal accumulation in one pixel of the image detector 2 and signal readout is proportional to I^{1/2}, where I is the image intensity read out for this pixel. Therefore, the pixel signal-to-noise ratio increases by a factor N^{1/2}, where N is a number of iterations that are performed for the capture of one and same scene portion which is imaged into one pixel area. Then, the plurality of image-spectrum segments which are produced by the invention within the photosensitive area of the image detector 2 allows that one and same scene strip is imaged and spectrally spread multiple times during the pushbroom-scanning of one complete zone of interest by the line-of-sight L of the imaging spectrophotometer 100. For example, as illustrated in Figure 5, one and same scene strip is imaged at time t₁ in the image-spectrum segment ISS1 through the slit S1, then at a later time t₂ in the image-spectrum segment ISS2 through the slit S2, and again at a later time t₃ in the image-spectrum segment ISS3 through the slit S3, and one more time at t₄ in the image-spectrum segment ISS4 through the slit S4. Thus, adding or combining the signals which are read out from the pixels of the image-spectrum segments ISS1-ISS4 leads to a resulting image of the scene strip which corresponds to the four accumulation and read-out sequences, and which has a signal-to-noise ratio multiplied by a factor 4^{1/2}=2. Figure 5 illustrates the instant content of each image-spectrum segment at times t₁, t₂, t₃ or t₄, respectively, in the output focal plane FP₂₀, due to the slits in the telescope focal plane FP₁₀ and the effect of the spectrophotometer 20. The content represented is a scene SC but only four slit-limited strips of such scene are imaged at one time and simultaneously wavelength dispersed along the column direction in each image-spectrum segment, and the complete image of the scene SC as represented only results from the pushbroom-scanning. For such operation, a controller 21 and a combining unit 22 may be coupled with the image detector 2, whereby the controller 21 triggers a series of successive accumulation and readout operations while the image of the scene SC moves across the slits S1-S4, and the combining unit 22 adds the pixel signals read out from image-spectrum segments ISS1-ISS4 at the times t₁-t₄. Each of these pixel signal additions relates to pixels which are located identically within the separate image-spectrum segments ISS1-ISS4. Hence, the signal-to-noise increase principle is applied independently and simultaneously for each scene element which is imaged and for each wavelength sampling interval which corresponds to one pixel line within the image-spectrum segments ISS1-ISS4. The controller 21 is located on board the satellite 200 whereas the combining unit 22 is preferably within a data processing ground station on the Earth E. For such resource distribution, the combining unit 22 is coupled with the other components through appropriate transmission means, such as radio or optical communication means.

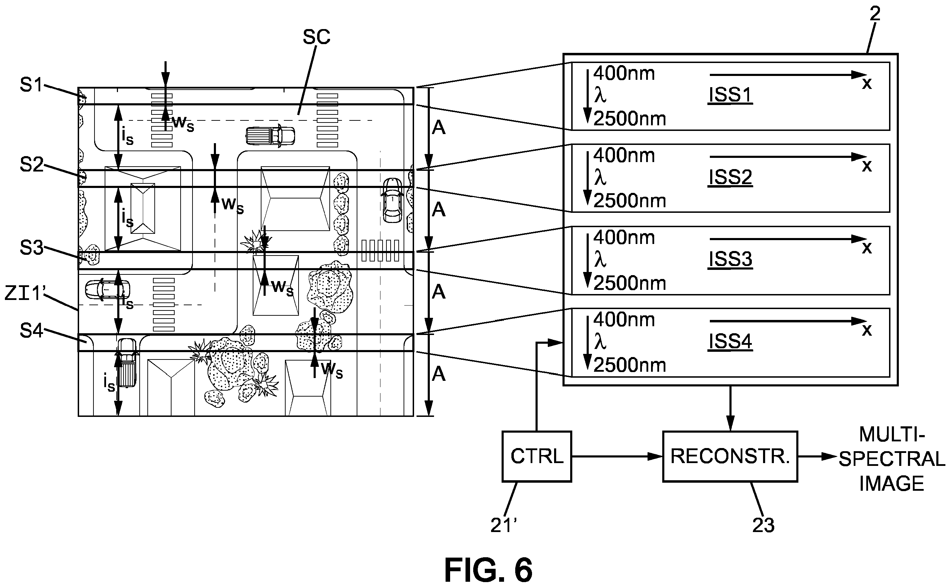

Second embodiments of the invention may be appropriate for decreasing the slowdown requirement that may apply for capturing a multispectral image of one zone of interest. The left part of Figure 6 shows the telescope focal plane FP₁₀ with the four mask slits S1-S4. The frame drawn in thin line and denoted ZI1' is the peripheral limit of the image of the zone of interest ZI1 in the telescope focal plane FP₁₀. Then, during one and same accumulation and readout operation of the whole image detector 2, signals are recovered simultaneously from four scene strips which are imaged on the image detector 2 respectively through the four slits S1-S4. Then, it is sufficient to scan the scene at least along a distance which corresponds to the slit offset, as indicated by the arrow A, for obtaining multispectral information from the whole area of the zone of interest ZI1. Thus, when the image detector 2 operates at the maximum full-frame readout frequency, the multi-slit configuration of the mask 1 allows reducing the slowdown duration which is necessary for each zone of interest to be captured in a full-frame multispectral image. Thus, the slowdown area is reduced in length, allowing faster imagery, or increased slowdown rate. In addition, the jumps of the line-of-sight L which are necessary between the processing sequences of several zones of interest are also reduced in length on average. This allows in turn increasing the numbers of zones of interest which can be multispectrally image-captured during one and same travel of the satellite 200 over these zones of interest. But in such operation, each one of the image-spectrum segments ISS1-ISS4 (right part of Figure 6) outputs progressively in time one fourth of the complete multispectral image of the zone of interest ZI1, and the complete multispectral image is to be reconstructed by joining the multispectral image segments which are outputted simultaneously and in parallel by the image-spectrum segments ISS1-ISS4 of the image detector 2. To this purpose, the image detector 2 is to be coupled with the controller 21', but also with an image reconstruction unit 23 as shown in Figure 6. The controller 21' is located on board the satellite 200 whereas the image reconstruction unit 23 may be within a data processing ground station on the Earth E. For such resource distribution, the image reconstruction unit 23 is coupled with the other components through appropriate transmission means, such as radio or optical communication means. The controller 21' triggers a series of successive accumulation and readout operations while the image of the scene moves across one inter-slit space. The reconstruction unit 23 gathers the line contents which are outputted successively by the image detector 2 from all the image-spectrum segments ISS1-ISS4, separately for each wavelength sampling interval.

Embodiments of the controllers 21 and 21', the combination unit 22 and the image reconstruction unit 23 are known from the Man skilled in the art, so that it is not necessary to describe them further herein.

It is also possible to obtain combined embodiments of the invention wherein for example, both image-spectrum segments ISS1 and ISS2 are operated as for the first embodiments described above, and also both image-spectrum segments ISS3 and ISS4 simultaneously and in parallel with the image-spectrum segments ISS1 and ISS2, but both segment pairs ISS1+ISS2 and ISS3+ISS4 are further operated as for the second embodiments.

Figure 3b corresponds to Figure 3a when the additional image detector 2' is implemented. Figure 3b further indicates pixel lines of the additional image detector 2' which are allowed to detect light originating from the scene and transmitted by the telescope 10. These pixel lines of the additional image detector 2' may be selected from a two-dimensional pixel array by a detector controller in a well-known manner. These pixel lines are denoted L1-L5, and are interleaved with the slits S1-S4 when superposing both telescope focal planes FP₁₀ and FP₁₀'. The pixel line L5 is optional, and advantageously implemented for the second embodiments described above. Possibly, each one of the pixel lines L1-L5 of the image detector 2' thus implemented may be replaced by several pixel lines, for example two or three, which are next to one another in the two-dimensional pixel array of the image detector 2', and which may be read out using a binning process.

Possibly, the image detector 2' may be of a type similar as that of the image detector 2. Alternatively, the image detector 2' may have a pixel pitch smaller than that of the image detector 2, for example two or three times smaller, for obtaining a better resolution.

No spectral filtering may be implemented for the image detection which is performed using the image detector 2', so that it constitutes an imaging channel which may be called panchromatic. Put another way, the wavelength detection range which is effective for the imaging channel comprised of the telescope 10, the beam splitter 3 and the image detector 2' may only result from spectral windows of these optical components.

For such combination of the image detectors 2 and 2' within the imaging spectrophotometer 100, the beam splitter 3 is designed so as to reflect and transmit in an interleaved manner, light sub-beams from the telescope 10. As shown in Figure 3c, the reflected light sub-beams are directed to the spectrophotometer 20, one sub-beam for each one of the slits S1-S4 of the mask 1, and the transmitted light sub-beams may be directed to the image detector 2', one sub-beam for each one of the pixel lines L1-L5. For example, the beam splitter 3 may be comprised of two prisms 30 and 30' which are glued together on an interface, with this interface being provided with spaced-apart reflecting strips Re. One reflecting strip Re may be dedicated to each slit of the mask 1, and two neighbouring strips Re are separated by a transmitting gap Tr dedicated of one of the pixel lines L1-L5.

It should be understood that the invention may be reproduced by changing secondary aspects thereof with respect to the detailed description just provided, while maintaining at least some of its advantages. It particular, the values cited, including the pixel pitch and numbers, wavelength sampling pitch, and also the slit design parameters and number, may be changed depending on the application of the invention. In particular, the following modifications may be implemented with respect to the embodiments described in detail, without involving inventive step:
- the wavelength-dispersion which is produced by the spectrophotometer may be generated by a single prism or by a grating, or by a combination of a prism and a grating, depending on the operation wavelength range;
- the folding mirrors 4 and 5 are optional, and the invention may be embodied without folding mirrors or using folding configurations which are different from that represented in Figures 2 and 2a;
- with respect to the embodiment illustrated in Figures 2, 2a and 3c, the spectrophotometer and the additional image detector may be reversed between both light outputs of the beam divider; and
- when a beam divider is arranged upstream the telescope focal plane, the additional image detector may be replaced with another spectrophotometer designed for operating in a wavelength range different or separate from that of the first spectrophotometer.

## Claims

1. An imaging spectrophotometer (100) comprising:
- a telescope (10), adapted for collecting light originating from a scene and for producing an image of the scene in a focal plane (FP₁₀) of said telescope;
- a mask (1) located in the telescope focal plane (FP₁₀), said mask being provided with a slit so as to transmit selectively light rays which are sent by the telescope (10) through said slit; and
- a spectrophotometer (20) arranged for imaging a content of the telescope focal plane (FP₁₀) in an output focal plane (FP₂₀), and having a dispersion direction which is contained in said output focal plane;
the spectrophotometer (20) comprising at least one array-type image detector (2) which is arranged at the output focal plane (FP₂₀), and oriented so that pixel columns of said image detector are parallel to the dispersion direction,
wherein the spectrophotometer (20) is oriented with respect to the mask (1) so that the dispersion direction is perpendicular to a longitudinal direction of an image of the slit in the output focal plane (FP₂₀), whereby scene elements which are imaged in the slit by the telescope (10) are re-imaged by the spectrophotometer on the image detector (2) within the slit image, and a spectrum of the light originating from each of said scene elements is spread perpendicular to the longitudinal direction of the slit image, thus forming on the array-type image detector an image-spectrum segment which is associated with the slit,
and wherein the mask (1) comprises several slits (S1-S4) which are parallel and spaced perpendicular to said slits, so that one respective image-spectrum segment (ISS1-ISS4) is associated with each slit separately from each other slit, and in that a spectral detection window of the spectrophotometer (20) together with an inter-slit spacing (iₛ) of the mask are such that any two image-spectrum segments which are associated with two neighbouring ones of the slits do not overlap in the output focal plane (FP₂₀),
the imaging spectrophotometer (100) further comprising:
- a beam divider (3) arranged upstream the telescope focal plane (FP₁₀) along a light propagation path within the telescope (10), and designed for allowing each slit (S1-S4) of the mask (1) to be entirely exposed to part of the light which is collected by the telescope, and for allowing another part of said light which is collected by the telescope to focus into another telescope focal plane (FP₁₀') without further travelling through the spectrophotometer (20); and
- an additional image detector set arranged at said another telescope focal plane (FP₁₀') so as to capture scene images produced by the telescope (10) from said another part of the light which does not travel through the spectrophotometer (20),
wherein the beam divider (3) is designed so as to direct respective first sub-beams of the light collected by the telescope (10) to the slits (S1-S4) of the mask (1), and respective second sub-beams of said light collected by the telescope to spaced-apart pixel lines (L1-L5) or spaced-apart pixel line groups of the additional image detector set, so that said pixel lines or pixel line groups of the additional image detector set are optically interleaved with the slits through said beam divider.

2. The imaging spectrophotometer (100) of claim 1, wherein the mask (1) comprises at least three slits, preferably four slits (S1-S4), preferably less than nine slits, which are parallel, identical and evenly spaced.

3. The imaging spectrophotometer (100) of claim 1 or 2, wherein the spectrophotometer (20) comprises a combination of two prisms (24', 24") for producing dispersion, both prisms being selected so that an effective non-linear wavelength-dispersion component, as resulting from said two-prism combination, is reduced when compared to a separate non-linear wavelength-dispersion component of each of said two prisms.

4. The imaging spectrophotometer (100) of any one of claims 1 to 3, further comprising:
- a controller (21) suitable to cause the image detector (2) to perform a series of successive accumulation and read-out operations while the image of the scene which is formed by the telescope (10) moves in the telescope focal plane (FP₁₀) in such a way that one and same scene strip is imaged in the output focal plane (FP₂₀) successively through several ones of the slits (S1-S4); and
- optionally a combining unit (22) suitable to combine contents from at least two of the image-spectrum segments (ISS1-ISS4), when said contents relate to said one and same scene strip but pertain to accumulation and read-out operations which have been performed separately.

5. The imaging spectrophotometer of any one of claims 1 to 4, further comprising:
- another controller (21') suitable to cause the image detector (2) to perform a series of successive accumulation and read-out operations while the image of the scene which is formed by the telescope (10) moves in the telescope focal plane (FP₁₀) over a distance at least equal to a sum of a slit width (wₛ) and the inter-slit spacing (iₛ); and
- optionally an image reconstruction unit (23) suitable to form a full-frame multispectral image by gathering line contents which are outputted successively by the image detector (2) from all the image-spectrum segments (ISS1-ISS4).

6. The imaging spectrophotometer (100) of any one of the preceding claims, wherein the additional image detector set is comprised of at least one another array-type image detector (2'), said pixel lines (L1-L5) or pixel line groups being spaced apart within a photosensitive surface of said another array-type image detector.

7. The imaging spectrophotometer (100) of claim 5, wherein a number of the pixel lines (L1-L5) or pixel line groups of the additional image detector set equals a number of the slits (S1-S4) provided in the mask (1) plus one.

8. Satellite (200) comprising a platform (201), an attitude control system (202) for varying an orientation of the platform, and an imaging spectrophotometer (100) according to any one of the preceding claims, said imaging spectrophotometer being supported rigidly by the platform, wherein the satellite further comprises steering means suitable for directing a line-of-sight of the imaging spectrophotometer (100) towards successive scene strips in a pushbroom manner, while the image detector (2) performs a series of successive accumulation and read-out operations.

9. Satellite (200) according to claim 8, wherein the steering means are suitable to produce a slowdown of a scanning of a zone of interest in the scene by the line-of-sight of the imaging spectrophotometer (100) while the image detector (2) performs the series of successive accumulation and read-out operations for capturing a full-frame multispectral image.

10. Satellite (200) according to claim 9, wherein the imaging spectrophotometer (100) meets claim 5, and the steering means are suitable to produce the slowdown of the scanning of the zone of interest in the scene by the line-of-sight of the imaging spectrophotometer limitedly within a scan duration in which the image of the scene which is formed by the telescope (10) moves in the telescope focal plane (FP₁₀) over a distance comprised between the sum of a slit width (wₛ) and the inter-slit spacing (iₛ), and another sum of the slit width and twice the inter-slit spacing, and the attitude control system or steering mirror system is suitable to switch said line-of-sight of the imaging spectrophotometer to another zone of interest in the scene after said scan duration has ended.

11. Process for capturing a multispectral image, comprising the following steps:
- providing a satellite (200) according to any one of claims 8 to 10, said satellite being in orbit around the Earth;
- directing the line-of-sight of the imaging spectrophotometer (100) towards a zone of interest on the Earth;
- moving the line-of sight so that an image of a scene which is contained in the zone of interest moves in the telescope focal plane (FP₁₀), and simultaneously controlling the array-type image detector (2) so as to perform a series of successive accumulation and read-out operations; and
- transmitting read-out data which have been produced by the successive accumulation and read-out operations to a data processing unit, said data processing unit being suitable for producing the multispectral image from the read-out data.

12. Process according to claim 11, wherein the data processing unit is located on the Earth, and the read-out data are transmitted from the satellite (200) to a ground receiving station and then forwarded to the data processing unit.

13. Process for obtaining a multispectral image, said process comprising:
- providing a data processing unit located on the Earth, said data processing unit being suitable for producing the multispectral image from the read-out data which have been produced by a process for capturing a multispectral image according to claim 11;
- collecting the read-out data and transmitting said read-out data to the data processing unit; and
- operating the data processing unit for producing the multispectral image from the read-out data.

14. Process according to any one of claims 11 to 13, wherein the data processing unit is a combining unit (22) suitable to combine contents from at least two of the image-spectrum segments (ISS1-ISS4), when said contents relate to one and same scene strip but pertain to accumulation and read-out operations which have been performed separately.

15. Process according to any one of claims 11 to 14, wherein the data processing unit is an image reconstruction unit (23) suitable to form a full-frame multispectral image by gathering line contents which are outputted successively by the image detector (2) from all the image-spectrum segments (ISS1-ISS4).

## Patentansprüche

1. Abbildung-Spektrophotometer (100), umfassend:
- ein Teleskop (10), welches dazu eingerichtet ist, Licht zu sammeln, welches von einer Szenerie stammt, und ein Bild der Szenerie in einer Fokalebene (FP₁₀) des Teleskops zu erzeugen;
- eine Blende (1), welche in der Teleskop-Fokalebene (FP₁₀) angeordnet ist, wobei die Blende mit einem Schlitz bereitgestellt ist, um selektiv Lichtstrahlen zu übertragen, welche mittels des Teleskops (10) durch den Schlitz gesendet werden; und
- ein Spektrophotometer (20), welches dazu eingerichtet ist, einen Inhalt der Teleskop-Fokalebene (FP₁₀) in einer Ausgangs-Fokalebene (FP₂₀) abzubilden, und eine Streuungsrichtung aufweist, welche in der Ausgangs-Fokalebene enthalten ist;
wobei das Spektrophotometer (20) wenigstens einen Bilddetektor (2) vom Array-Typ umfasst, welcher an der Ausgangs-Fokalebene (FP₂₀) angeordnet ist und so ausgerichtet ist, dass Pixel-Spalten des Bilddetektors parallel zu der Streuungsrichtung sind,
wobei das Spektrophotometer (20) in Bezug auf die Blende (1) ausgerichtet ist, so dass die Streuungsrichtung senkrecht zu einer longitudinalen Richtung eines Bildes des Schlitzes in der Ausgangs-Fokalebene (FP₂₀) ist, wobei Szenerieelemente, welche in dem Schlitz mittels des Teleskops (10) abgebildet sind, mittels des Spektrophotometers an dem Bilddetektor (2) innerhalb des Schlitzbildes erneut abgebildet sind, und ein Spektrum des Lichts, welches von jedem der Szenerieelemente stammt, senkrecht zu der longitudinalen Richtung des Schlitzbildes ausgebreitet wird, wodurch an dem Bilddetektor (2) vom Array-Typ ein Licht-Spektrum-Segment gebildet wird, welches dem Schlitz zugeordnet ist,
und wobei die Blende (1) mehrere Schlitze (S1-S4) umfasst, welche parallel zu den Schlitzen und senkrecht zu diesen beabstandet sind, so dass ein jeweiliges Bild-Spektrum-Segment (ISS1-ISS4) jedem Schlitz separat von jedem anderen Schlitz zugeordnet ist, und wobei ein spektrales Detektionsfenster des Spektrophotometers (20) zusammen mit einem Zwischen-Schlitz-Abstand (iₛ) der Blende derart sind, dass zwei beliebige Bild-Spektrum-Segmente, welche zwei benachbarten der Schlitze zugeordnet sind, in der Ausgangs-Fokalebene (FP₂₀) nicht überlappen,
wobei das Abbildung-Spektrophotometer (100) ferner umfasst:
- einen Strahlteiler (3), welcher entlang eines Lichtausbreitungspfades innerhalb des Teleskops (10) stromaufwärts der Teleskop-Fokalebene (FP₁₀) angeordnet ist und dazu ausgebildet ist, jedem Schlitz (S1-S4) der Blende (1) zu erlauben, vollständig einem Teil des Lichts ausgesetzt zu sein, welches mittels des Teleskops gesammelt wird, und einem anderen Teil des Lichts, welches mittels des Teleskops gesammelt wird, zu erlauben, in eine andere Teleskop-Fokalebene (FP₁₀') zu fokussieren, ohne weiter durch das Spektrophotometer (20) zu verlaufen, und
- einen zusätzlichen Bilddetektor-Satz, welcher an der anderen Teleskop-Fokalebene (FP₁₀') angeordnet ist, um Szeneriebilder aufzunehmen, welche mittels des Teleskops (10) von dem anderen Teil des Lichts erzeugt werden, welches nicht durch das Spektrophotometer (20) verläuft,
wobei der Strahlteiler (3) dazu ausgebildet ist, jeweilige erste Unter-Strahlen des Lichts, welches mittels des Teleskops (10) gesammelt wird, zu den Schlitzen (S1-S4) der Blende (1), und jeweilige zweite Unterstrahlen des Lichts, welches mittels des Teleskops gesammelt wird, zu beabstandeten Pixel-Zeilen (L1-L5) oder beabstandeten Pixel-Zeilen-Gruppen des zusätzlichen Bilddetektor-Satzes zu richten, so dass die Pixel-Zeilen oder die Pixel-Zeilen-Gruppen des zusätzlichen Bilddetektor-Satzes mit den Schlitzen durch den Strahlteiler optisch verschachtelt sind.

2. Abbildung-Spektrophotometer (100) nach Anspruch 1, wobei die Blende (1) wenigstens drei Schlitze, vorzugsweise vier Schlitze (S1-S4), vorzugsweise weniger als neun Schlitze, umfasst, welche parallel, identisch und gleichmäßig beabstandet sind.

3. Abbildung-Spektrophotometer (100) nach Anspruch 1 oder 2, wobei das Spektrophotometer (20) eine Kombination zweier Prismen (24', 24") umfasst, um eine Streuung zu erzeugen, wobei beide Prismen so ausgewählt sind, dass eine effektive nicht-lineare Wellenlänge-Dispersion-Komponente, wie von der Zwei-Prismen-Kombination resultierend, im Vergleich zu einer separaten nicht-linearen Wellenlänge-Dispersion-Komponente jedes der beiden Prismen reduziert ist.

4. Abbildung-Spektrophotometer (100) nach einem der Ansprüche 1 bis 3, ferner umfassend:
- eine Steuerungseinheit (21), welche dazu geeignet ist, den Bilddetektor (2) zu veranlassen, eine Reihe aufeinanderfolgender Akkumulation-und-Auslese-Operationen durchzuführen, während sich das Bild der Szenerie, welches durch das Teleskop (10) gebildet ist, in einer derartigen Weise in der Teleskop-Fokalebene (FP₁₀) bewegt, dass ein und derselbe Szeneriestreifen in der Ausgangs-Fokalebene (FP₂₀) aufeinanderfolgend durch mehrere der Schlitze (S1-S4) abgebildet wird; und
- optional eine Kombinationseinheit (22), welche dazu geeignet ist, Inhalte von wenigstens zwei der Bild-Spektrum-Segmente (ISS1-ISS4) zu kombinieren, wenn sich die Inhalte auf ein und denselben Szeneriestreifen beziehen, jedoch zu Akkumulation-und-Auslese-Operationen gehören, welche separat durchgeführt worden sind.

5. Abbildung-Spektrophotometer nach einem der Ansprüche 1 bis 4, ferner umfassend:
- eine weitere Steuerungseinheit (21'), welche dazu geeignet ist, den Bilddetektor (2) zu veranlassen, eine Reihe aufeinanderfolgender Akkumulation-und-Auslese-Operationen durchzuführen, während sich das Bild der Szenerie, welches durch das Teleskop (10) gebildet ist, über eine Distanz in der Teleskop-Fokalebene (FP₁₀) bewegt, welche wenigstens gleich einer Summe einer Schlitzbreite (wₛ) und des Zwischen-Schlitz-Abstands (iₛ) ist; und
- optional eine Bild-Rekonstruktionseinheit (23), welche dazu geeignet ist, ein multispektrales Full-Frame-Bild zu erzeugen, indem Zeileninhalte, welche aufeinanderfolgend durch den Bilddetektor (2) ausgegeben werden, aus allen der Bild-Spektrum-Segmente (ISS1-ISS4) erfasst werden.

6. Abbildung-Spektrophotometer (100) nach einem der vorhergehenden Ansprüche, wobei der zusätzliche Bilddetektor-Satz aus wenigstens einem anderen Bilddetektor (2') vom Array-Typ gebildet ist, wobei die Pixel-Zeilen (L1-L5) oder die Pixel-Zeilen-Gruppen innerhalb einer photosensitiven Fläche des anderen Bilddetektors vom Array-Typ voneinander beabstandet sind.

7. Abbildung-Spektrophotometer (100) nach Anspruch 5, wobei eine Anzahl der Pixel-Zeilen (L1-L5) oder der Pixel-Zeilen-Gruppen des zusätzlichen Bilddetektor-Satzes einer Anzahl der Schlitze (S1-S4), welche in der Blende (1) bereitgestellt sind, plus eins entspricht.

8. Satellit (200), umfassend eine Plattform (201), ein Lageregelungssystem (202) zum Variieren einer Ausrichtung der Plattform, und ein Abbildung-Spektrophotometer (100) nach einem der vorhergehenden Ansprüche, wobei das Abbildung-Spektrophotometer starr durch die Plattform gehaltert ist, wobei der Satellit ferner Steuerungsmittel umfasst, welche dazu geeignet sind, eine Sichtlinie des Abbildung-Spektrophotometers (100) in einer Pushbroom-Weise in Richtung aufeinanderfolgender Szeneriestreifen zu richten, während der Bilddetektor (2) eine Reihe aufeinanderfolgender Akkumulation-und-Auslese-Operationen durchführt.

9. Satellit (200) nach Anspruch 8, wobei die Steuerungsmittel dazu geeignet sind, eine Verlangsamung eines Scannens einer Zone von Interesse in der Szenerie durch die Sichtlinie des Abbildung-Spektrophotometers (100) zu erzeugen, während der Bilddetektor (2) die Reihe aufeinanderfolgender Akkumulation-und-Auslese-Operationen zum Aufnehmen eines multispektralen Full-Frame-Bilds durchführt.

10. Satellit (200) nach Anspruch 9, wobei das Abbildung-Spektrophotometer (100) Anspruch 5 genügt, und die Steuerungsmittel dazu geeignet sind, die Verlangsamung des Scannens der Zone von Interesse in der Szenerie durch die Sichtlinie des Abbildung-Spektrophotometers begrenzt innerhalb einer Scan-Dauer durchzuführen, in welcher sich das Bild der Szenerie, welche durch das Teleskop (10) gebildet ist, über eine Distanz in der Teleskop-Fokalebene (FP₁₀) bewegt, welche zwischen der Summe einer Schlitzbreite (wₛ) und dem Zwischen-Schlitz-Abstand (iₛ), und einer anderen Summe der Schlitzbreite und dem Zweifachen des Zwischen-Schlitz-Abstands umfasst ist, und wobei das Lagensteuerungssystem oder das Lenkspiegelsystem dazu geeignet ist, die Sichtlinie des Abbildung-Spektrophotometers auf eine andere Zone von Interesse in der Szenerie umzuschalten, nachdem die Scan-Dauer beendet ist.

11. Verfahren zum Aufnehmen eines multispektralen Bildes, umfassend die folgenden Schritte:
- Bereitstellen eines Satelliten (200) nach einem der Ansprüche 8 bis 10, wobei sich der Satellit in einem Orbit um die Erde befindet;
- Richten der Sichtlinie des Abbildung-Spektrophotometers (100) in Richtung einer Zone von Interesse auf der Erde;
- Bewegen der Sichtlinie so, dass sich ein Bild einer Szenerie, welche in der Zone von Interesse enthalten ist, in der Teleskop-Fokal-Ebene (FP₁₀) bewegt, und gleichzeitig Steuern des Bild-Detektors (2) vom Array-Typ, um eine Reihe aufeinanderfolgender Akkumulation-und-Auslese-Operationen durchzuführen, und
- Übertragen von Auslesedaten, welche durch die aufeinanderfolgenden Akkumulation-und-Auslese-Operationen erzeugt worden sind, an eine Datenverarbeitungseinheit, wobei die Datenverarbeitungseinheit dazu geeignet ist, aus den Auslesedaten das multispektrale Bild zu erzeugen.

12. Verfahren nach Anspruch 11, wobei die Datenverarbeitungseinheit auf der Erde angeordnet ist, und die Auslesedaten von dem Satelliten (200) zu einer Bodenempfangsstation übertragen und dann an die Datenverarbeitungseinheit weitergeleitet werden.

13. Verfahren zum Erhalten eines multispektralen Bildes, wobei das Verfahren umfasst:
- Bereitstellen einer Datenverarbeitungseinheit, welche auf der Erde angeordnet ist, wobei die Datenverarbeitungseinheit dazu geeignet ist, das multispektrale Bild aus den Auslesedaten zu erzeugen, welche durch ein Verfahren zum Aufnehmen eines multispektralen Bildes nach Anspruch 11 erzeugt worden sind;
- Sammeln der Auslesedaten und Übertragen der Auslesedaten an die Datenverarbeitungseinheit; und
- Betreiben der Datenverarbeitungseinheit zum Erzeugen des multispektralen Bildes aus den Auslesedaten.

14. Verfahren nach einem der Ansprüche 11 bis 13, wobei die Datenverarbeitungseinheit eine Kombinationseinheit (22) ist, welche dazu geeignet ist, Inhalte von wenigstens zwei der Bild-Spektrum-Segmente (ISS1-ISS4) zu kombinieren, wenn sich die Inhalte auf ein und denselben Szeneriestreifen beziehen, jedoch zu Akkumulation-und-Auslese-Operationen gehören, welche separat durchgeführt worden sind.

15. Verfahren nach einem der Ansprüche 11 bis 14, wobei die Datenverarbeitungseinheit eine Bild-Rekonstruktionseinheit (23) ist, welche dazu geeignet ist, ein multispektrales Full-Frame-Bild zu erzeugen, indem Zeileninhalte, welche aufeinanderfolgend durch den Bilddetektor (2) ausgegeben werden, aus allen der Bild-Spektrum-Segmente (ISS1-ISS4) erfasst werden.

## Revendications

1. Spectrophotomètre imageur (100) comprenant :
- un télescope (10), adapté pour collecter une lumière provenant d'une scène et pour produire une image de la scène dans un plan focal (FP₁₀) dudit télescope ;
- un masque (1) situé dans le plan focal (FP₁₀) du télescope, ledit masque étant pourvu d'une fente de manière à transmettre sélectivement des rayons lumineux qui sont envoyés par le télescope (10) à travers ladite fente ; et
- un spectrophotomètre (20) agencé pour imager un contenu du plan focal (FP₁₀) du télescope dans un plan focal de sortie (FP₂₀), et comportant une direction de dispersion qui est contenue dans ledit plan focal de sortie ;
le spectrophotomètre (20) comprenant au moins un détecteur d'image (2) de type à réseau qui est agencé au niveau du plan focal de sortie (FP₂₀), et orienté de sorte que des colonnes de pixels dudit détecteur d'image soient parallèles à la direction de dispersion,
dans lequel le spectrophotomètre (20) est orienté par rapport au masque (1) de sorte que la direction de dispersion soit perpendiculaire à une direction longitudinale d'une image de la fente dans le plan focal de sortie (FP₂₀), de telle manière que des éléments de scène qui sont imagés dans la fente par le télescope (10) soient réimagés par le spectrophotomètre sur le détecteur d'image (2) à l'intérieur de l'image de fente, et un spectre de la lumière provenant de chacun desdits éléments de scène est étalé perpendiculairement à la direction longitudinale de l'image de fente, formant ainsi, sur le détecteur d'image du type à réseau, un segment de spectre d'image qui est associé à la fente,
et dans lequel le masque (1) comprend plusieurs fentes (S1-S4) qui sont parallèles et espacées perpendiculairement auxdites fentes, de sorte qu'un segment de spectre d'image (ISS1-ISS4) respectif soit associé à chaque fente séparément de chaque autre fente, et qu'une fenêtre de détection spectrale du spectrophotomètre (20) conjointement avec un espacement entre fentes (iₛ) du masque soient tels que deux segments de spectre d'image quelconques qui sont associés à deux fentes voisines ne se chevauchent pas dans le plan focal de sortie (FP₂₀),
le spectrophotomètre imageur (100) comprenant en outre :
- un diviseur de faisceau (3) agencé en amont du plan focal (FPio) du télescope le long d'un trajet de propagation de la lumière à l'intérieur du télescope (10), et conçu pour permettre à chaque fente (S1-S4) du masque (1) d'être exposée entièrement à une partie de la lumière qui est collectée par le télescope, et pour permettre à une autre partie de ladite lumière qui est collectée par le télescope de se focaliser dans un autre plan focal (FP₁₀') du télescope sans continuer en traversant le spectrophotomètre (20) ; et
- un ensemble de détection d'image supplémentaire agencé au niveau dudit autre plan focal (FP₁₀') du télescope de manière à saisir des images de scène produites par le télescope (10) à partir de ladite autre partie de la lumière qui ne traverse pas le spectrophotomètre (20),
dans lequel le diviseur de faisceau (3) est conçu de manière à diriger des premiers sous-faisceaux respectifs de la lumière collectée par le télescope (10) vers les fentes (S1-S4) du masque (1), et des seconds sous-faisceaux respectifs de ladite lumière collectée par le télescope vers des lignes de pixels (L1-L5) espacées l'une de l'autre ou des groupes de lignes de pixels espacés l'une de l'autre de l'ensemble de détection d'image supplémentaire, de sorte que lesdites lignes de pixels ou lesdits groupes de lignes de pixels de l'ensemble de détection d'image supplémentaire soient entrelacés optiquement avec les fentes à travers ledit diviseur de faisceau.

2. Spectrophotomètre imageur (100) selon la revendication 1, dans lequel le masque (1) comprend au moins trois fentes, de préférence quatre fentes (S1-S4), de préférence moins de neuf fentes, qui sont parallèles, identiques et équidistantes.

3. Spectrophotomètre imageur (100) selon la revendication 1 ou 2, dans lequel le spectrophotomètre (20) comprend une combinaison de deux prismes (24', 24") pour produire une dispersion, les deux prismes étant sélectionnés de sorte qu'une composante effective de dispersion non-linéaire de longueur d'onde, résultant de ladite combinaison de deux prismes, soit réduite par comparaison à une composante séparée de dispersion non-linéaire de longueur d'onde de chacun desdits deux prismes.

4. Spectrophotomètre imageur (100) selon l'une quelconque des revendications 1 à 3, comprenant en outre :
- un dispositif de commande (21) adapté pour amener le détecteur d'image (2) à réaliser une série d'opérations d'accumulation et de lecture successives pendant que l'image de la scène qui est formée par le télescope (10) se déplace dans le plan focal (FP₁₀) du télescope de telle manière qu'une même bande de scène soit imagée dans le plan focal de sortie (FP₂₀) successivement à travers plusieurs des fentes (S1-S4) ; et
- facultativement une unité de combinaison (22) adaptée pour combiner des contenus d'au moins deux des segments de spectre d'image (ISS1-ISS4), lorsque lesdits contenus concernent une même bande de scène mais sont relatifs à des opérations d'accumulation et de lecture qui ont été réalisées séparément.

5. Spectrophotomètre imageur selon l'une quelconque des revendications 1 à 4, comprenant en outre :
- un autre dispositif de commande (21') adapté pour amener le détecteur d'image (2) à réaliser une série d'opérations d'accumulation et de lecture successives pendant que l'image de la scène qui est formée par le télescope (10) se déplace dans le plan focal (FP₁₀) du télescope sur une distance au moins égale à une somme d'une largeur de fente (wₛ) et de l'espacement entre fentes (iₛ) ; et
- facultativement une unité de reconstruction d'image (23) adaptée pour former une image multispectrale à trame complète en réunissant des contenus de ligne qui sont délivrés successivement par le détecteur d'image (2) à partir de tous les segments de spectre d'image (ISS1-ISS4).

6. Spectrophotomètre imageur (100) selon l'une quelconque des revendications précédentes, dans lequel l'ensemble de détection d'image supplémentaire se compose d'au moins un autre détecteur d'image du type réseau (2'), lesdites lignes de pixels (L1-L5) ou lesdits groupes de lignes de pixels étant espacés l'un de l'autre à l'intérieur d'une surface photosensible dudit autre détecteur d'image du type réseau.

7. Spectrophotomètre imageur (100) selon la revendication 5, dans lequel un nombre des lignes de pixels (L1-L5) ou des groupes de lignes de pixels de l'ensemble de détection d'image supplémentaire est égal à un nombre des fentes (S1-S4) prévues dans le masque (1) plus un.

8. Satellite (200) comprenant une plate-forme (201), un système de commande d'attitude (202) pour faire varier une orientation de la plate-forme, et un spectrophotomètre imageur (100) selon l'une quelconque des revendications précédentes, ledit spectrophotomètre imageur étant supporté rigidement par la plate-forme, dans lequel le satellite comprend en outre des moyens de direction aptes à diriger une ligne de visée du spectrophotomètre imageur (100) vers des bandes de scène successives d'une manière à balayage transversal, pendant que le détecteur d'image (2) réalise une série d'opérations d'accumulation et de lecture successives.

9. Satellite (200) selon la revendication 8, dans lequel les moyens de direction sont aptes à produire un ralentissement d'un balayage d'une zone d'intérêt dans la scène par la ligne de visée du spectrophotomètre imageur (100) pendant que le détecteur d'image (2) réalise la série d'opérations d'accumulation et de lecture successives pour saisir une image multispectrale à trame complète.

10. Satellite (200) selon la revendication 9, dans lequel le spectrophotomètre imageur (100) est selon la revendication 5, et les moyens de direction sont aptes à produire le ralentissement du balayage de la zone d'intérêt dans la scène par la ligne de visée du spectrophotomètre imageur de manière limitée au cours d'une durée de balayage dans laquelle l'image de la scène qui est formée par le télescope (10) se déplace dans le plan focal (FP₁₀) du télescope sur une distance comprise entre la somme d'une largeur de fente (wₛ) et de l'espacement entre fentes (iₛ), et une autre somme de la largeur de fente et deux fois l'espacement entre fentes, et le système de commande d'attitude ou le système de direction de miroir est apte à commuter ladite ligne de visée du spectrophotomètre imageur vers une autre zone d'intérêt dans la scène après que ladite durée de balayage est terminée.

11. Procédé de saisie d'une image multispectrale, comprenant les étapes suivantes :
- fournir un satellite (200) selon l'une quelconque des revendications 8 à 10, ledit satellite étant en orbite autour de la Terre ;
- diriger la direction de la ligne de visée du spectrophotomètre imageur (100) vers une zone d'intérêt sur la Terre ;
- déplacer la ligne de visée de sorte qu'une image d'une scène qui est contenue dans la zone d'intérêt se déplace dans le plan focal (FP₁₀) du télescope, et simultanément commander le détecteur d'image du type réseau (2) de manière à réaliser une série d'opérations d'accumulation et de lecture successives ; et
- transmettre des données lues qui ont été produites par les opérations d'accumulation et de lecture successives à une unité de traitement de données, ladite unité de traitement de données étant apte à produire l'image multispectrale à partir des données lues.

12. Procédé selon la revendication 11, dans lequel l'unité de traitement de données est située sur la Terre, et les données lues sont transmises depuis le satellite (200) à une station réceptrice terrestre puis transférées à l'unité de traitement de données.

13. Procédé d'obtention d'une image multispectrale, ledit procédé comprenant :
- fournir une unité de traitement de données située sur la Terre, ladite unité de traitement de données étant apte à produire l'image multispectrale à partir des données lues qui ont été produites par un procédé de saisie d'image multispectrale selon la revendication 11 ;
- collecter les données lues et transmettre lesdites données lues à l'unité de traitement de données ; et
- exploiter l'unité de traitement de données pour produire l'image multispectrale à partir des données lues.

14. Procédé selon l'une quelconque des revendications 11 à 13, dans lequel l'unité de traitement de données est une unité de combinaison (22) apte à combiner des contenus d'au moins deux des segments de spectre d'image (ISS1-ISS4), lorsque lesdits contenus concernent une même bande de scène mais sont relatifs à des opérations d'accumulation et de lecture qui ont été réalisées séparément.

15. Procédé selon l'une quelconque des revendications 11 à 14, dans lequel l'unité de traitement de données est une unité de reconstruction d'image (23) apte à former une image multispectrale à trame complète en réunissant des contenus de ligne qui sont délivrés successivement par le détecteur d'image (2) à partir de tous les segments de spectre d'image (ISS1-ISS4).
